(19) Europäisches Patentamt
European Patent Office
Office européen des brevets

(11) Veröffentlichungsnummer: **0 222 333 B1**

(12) # EUROPÄISCHE PATENTSCHRIFT

(45) Veröffentlichungstag der Patentschrift: **08.01.92**

(51) Int. Cl.$^5$: **C09J 4/04**, C08F 222/00

(21) Anmeldenummer: **86115425.0**

(22) Anmeldetag: **07.11.86**

(54) **Klebstoffe auf Basis von Cyanacrylsäureestern.**

(30) Priorität: **15.11.85 DE 3540594**

(43) Veröffentlichungstag der Anmeldung:
**20.05.87 Patentblatt 87/21**

(45) Bekanntmachung des Hinweises auf die Patenterteilung:
**08.01.92 Patentblatt 92/02**

(84) Benannte Vertragsstaaten:
**AT BE CH DE FR GB IT LI LU NL SE**

(56) Entgegenhaltungen:
**EP-A- 0 105 062**
**FR-A- 2 246 615**

(73) Patentinhaber: **Henkel Kommanditgesellschaft auf Aktien**
**Postfach 1100 Henkelstrasse 67**
**W-4000 Düsseldorf-Holthausen(DE)**

(72) Erfinder: **Marten, Klaus, Dr.**
**Röntgenstrasse 2**
**W-4010 Hilden(DE)**
Erfinder: **Nicolaisen, Heinz-Christian**
**Ossietzkyring 4**
**W-3000 Hannover 91(DE)**

EP 0 222 333 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft schnell abbindende Klebstoffe auf Basis von α-Cyanacrylsäureestern mit guter Lagerstabilität und einer kurzen Abbindezeit an den unterschiedlichsten Substraten. Klebstoffe dieses Typs sind seit vielen Jahren bekannt und werden mit unterschiedlichen Abbindecharakteristiken und in verschiedener Viskositätseinstellung in weiten Bereichen der Verbindungstechnik eingesetzt.

Es ist weiterhin bekannt, die an sich farblosen α-Cyanacrylsäureesternzur besseren Applikationskontrolle mit geeigneten Farbstoffen einzufärben. Da sichtbare Farbstoffe die geklebten Stellen bleibend sichtbar machen, hat man bereits fluoreszierende Farbstoffe für derartige Zwecke eingesetzt. Es handelt sich hier beispielsweise um Fluoreszenzfarbstoffe aus der Gruppe C.I. Solvent Green 5, C.I. Acid Red 50 und C.I. Acid Red 52.

Mit diesen Fluoreszenzstoffen kann man im allgemeinen befriedigende technische Resultate erzielen, jedoch bestand der Wunsch, auch weitere fluoreszierende Substanzen in α-Cyanacrylsäure einzusetzen, die in verschiedenen Spektralbereichen andersartige charkateristische Fluoreszenz zeigen.

Es wurde nun gefunden, daß man ohne jede Beeinträchtigung der sonstigen Eigenschaften der Klebstoffe auf Basis von α-Cyanacrylsäureestern solche bei UV-Strahlung fluoreszierende Verbindungen einarbeiten kann, die ausgewählt sind aus der Gruppe der Verbindungen:

a) über einen Rest X gebundene Bis-benzoxazolyle;

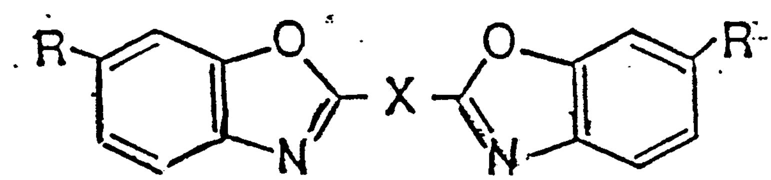

wobei X ein Thiophenring oder eine Ethylengruppe und R = H oder einen niederen Alkylrest bedeuten sowie tragen können,

b) Cumarinderivate:

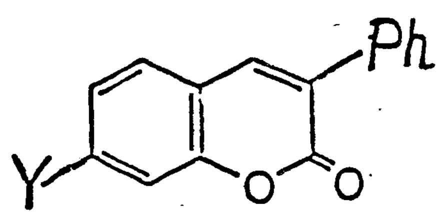

wobei Ph einen aromatischen Rest und Y einen Rest der Formel

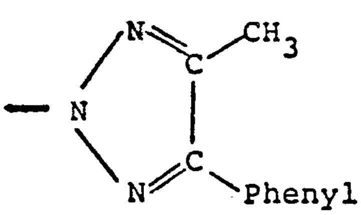

darstellen.

Unter den Bis-benzoxazolylen, die bei R substituiert sind, kommen insbesondere solche in Frage, welche eine Methylgruppe, eine Butylgruppe, insbesondere eine tert.-Butylgruppe tragen. Bei den Cumarinderivaten ist der aromatische Rest Ph bevorzugt eine Phenylgruppe. Geeignete Fluoreszenzstoffe sind unter dem Namen "optische Aufheller" handelsübliche Produkte, wie zum Beispiel die verschiedenen Typen von Blankophor, Tinopal, Hostalux sowie Uvitex.

Da die Ester der α-Cyanacrylsäure sehr reaktionsfreudige Verbindungen darstellen, ist eine Eingrenzung der üblichen optischen Aufheller gemäß dem vorstehend Ausgeführten notwendig. Verbindungen, die dem geforderten Kriterien nicht genügen, verändern die Kenndaten der Klebstoffe, die Abbindezeit an Metallen, Kunststoffen, Elastomeren, Holz, Glas usw. negativ und sind deshalb ungeeignet. Auch kann die Lagerstabilität durch bestimmte optische Aufheller nachhaltig herabgesetzt werden, so daß sie ebenfalls

ausscheiden. Weitere wichtige Kennzeichen sind darüber hinaus, daß die Transparenz der α-Cyanacrylsäureester nicht verändert wird und insbesondere auch, daß sich die optischen Aufheller leicht im Cyanacrylsäureester auflösen lassen. Verbindungen, die diesen Forderungen genügen, sind beispielsweise Uvitex OB, Blankophor CA 4410 sowie Hostalux KCB und das Tinopal SWN und Tinopal SOP. Dagegen wurde festgestellt, daß Tinopal RBS oder Blankophor FBO eine vorzeitige Polymerisation der Cyanacrylsäureester auslöst. Selbst bei einem Zusatz von nur 10 ppm war ein sonst über 1 Jahr stabiler Cyanacrylsäureethylester nach einer Woche bei Raumtemperatur volständig polymerisiert.

Die erfindungsgemäß einsetzbaren optischen Aufheller können in einer Menge zwischen 5 000 ppm und 10 ppm verwendet werden. Welche Menge jeweils eingesetzt wird, hängt von der gewünschten Fluoreszenz und auch von der chemischen Zusammensetzung der Bis-benzoxazolyle oder Cumarinderivate ab. Im allgemeinen wird man jedoch mit Zusätzen in einer Größenordnung von 10 bis 500 ppm arbeiten.

Als Basis für die mit den erfindungsgemäßen Zusätzen versehenen Klebstoffe eignet sich in erster Linie ein α-Cyanacrylsäureester, dessen alkoholischer Bestandteil eine Alkylgruppe mit 1 bis 12 Kohlenstoffatomen, die mit einem Substituenten wie einem Halogenatom oder einer Alkoxygruppe, substituiert sein kann, eine geradkettige oder verzweigtkettige Alkenylgruppe mit 2 bis 12 Kohlenstoffatomen, eine Alkinylgruppe mit 2 bis 12 Kohlenstoffatomen, eine Cycloalkylgruppe, eine Aralkylgruppe oder eine Arylgruppe sein kann. Beispiele für derartige Bestandteile sind Methyl-, Ethyl-, n-Propyl-, Isopropyl-, n-Butyl-, Isobutyl-, Pentyl-, Hexyl-, Allyl-, Methallyl-, Crotyl-, Propargyl-, Cyclohexyl-, Benzyl-, Phenyl-, Cresyl-, 2-Chlorethyl-, 3-Chlorpropyl-, 2-Chlorbutyl-, Trifluorethyl-, 2-Methoxyethyl-, 3-Methoxybutyl- und 2-Ethoxyethylreste.

Darüber hinaus können die erfindungsgemäßen Klebstoffzusammensetzungen übliche Zusätze wie Polymerisationsinhibitoren zur Verhinderung einer vorzeitigen und unerwünschten anionischen und/oder radikalischen Polymerisation, Verdickungsmittel, Weichmacher, Parfums, Farbstoffe, Pigmente, Polymerisationskatalysatoren usw. enthalten.

## Beispiele

### Beispiel 1

α-Cyanacrylsäureethylester der 100 ppm Hydrochinon und etwa 500 ppm Phosphorsäure sowie die übliche Menge $SO_2$ enthielt, wurde mit 10 sowie 100 ppm an 2,5-Bis(5-tert.-butyl-2-benzoxazolyl)thiophen (Uvitex OB) versetzt. Dieser optische Aufheller löste sich gut im Cyanacrylsäureester auf und verändert ihn nicht im Aussehen. Diese Ansätze wurden zusammen mit einer solchen, die keinen optischen Aufheller enthielt, 25 Tage bei 60 °C gelagert. Danach wurde die Viskosität gemessen.

Sowohl die Ausgangsviskosität als auch die Viskosität der Lagerung der nicht mit optischem Aufheller versetzten Probe und der die 10 ppm enthielt, lag bei 50 mPa • s. Die Proben, die 100 ppm der Benzoxazolylverbindung enthielten, war nur um 10 % auf 55 mPa • s angestiegen.

Die Viskositätsmessung wurde bei 20 °C vorgenommen. Darüber hinaus wurde festgestellt, daß sowohl bei der Probe, die keinen optischen Aufheller enthielt, als auch bei den Proben, die mit optischem Aufheller versetzt waren, die Abbindezeit an EPDM-Substrat bei 3 Sekunden lag (frisch angesetzt wie nach 25tägiger Lagerung bei 60 °C).

### Beispiel 2

In der gleichen Weise wurde mit einem α-Cyanacrylsäureethylester verfahren, aber statt dessen ein Cumarinderivat verwendet, das in der 3-Stellung einen Phenylrest enthielt (Blankophor CA 4410).

Auch in diesem Falle war die Stabilität während der 25tägigen Lagerung gegeben, d.h. unverändert bzw. bei den 100 ppm enthaltenden Proben war die Viskosität von 50 auf 55 mPa • s angestiegen. Die Abbindezeit an EPDM-Substrat lag unverändert bei 3 Sekunden.

### Vergleichsversuch

Der gleiche α-Cyanacrylsäureester wurde mit 100 ppm Blankophor FBO bzw. Tinopal RBS versetzt und bei 60 °C gelagert. Nach 3 bzw. 6 Stunden war bereits eine vollständige Polymerisation eingetreten.

## Patentansprüche

1. Klebstoffe auf Basis Von α-Cyanacrylsäureestern mit einem Gehalt an üblichen Stabilisatoren, sowie gegebenenfalls anderen Hilfsstoffen sowie sogenannten optischen Aufhellern in einer Menge von bis zu

5000 ppm, dadurch gekennzeichnet, daß man aus der Gruppe der bei UV-Strahlung fluoreszierenden Verbindungen folgende auswählt;

a) über einen Rest X gebundene Bis-benzoxazolyle:

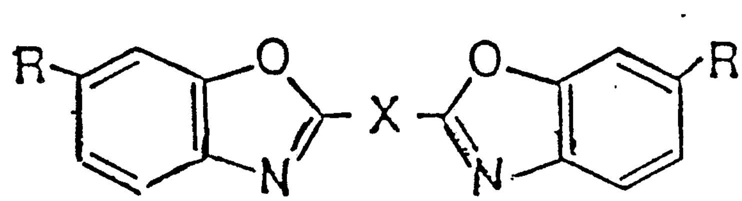

wobei X ein Thiophenring oder eine Ethylengruppe und R = H oder eine niederen Alkylrest bedeuten, sowie

b) Cumarinderivate:

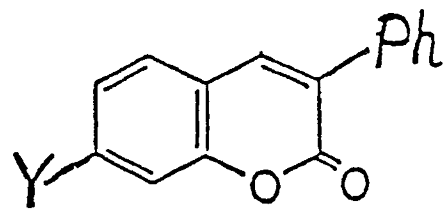

wobei Ph einen aromatischen Rest und Y einen Rest der Formel

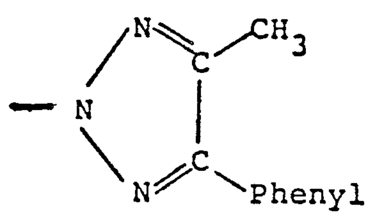

darstellen.

## Claims

1. Adhesives based on α-cyanoacrylates containing the usual stabilizers and, optionally, other auxiliaries and so-called optical brighteners in a quantity of up to 5,000 ppm, characterized in that the following compounds are selected from the group which fluoresce in UV light:

a) bis-benzoxazolyls attached by a radical X:

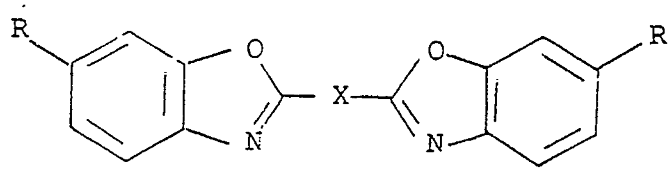

in which X is a thiophene ring or an ethylene group and R = H or may represent a lower alkyl group,

b) coumarin derivatives:

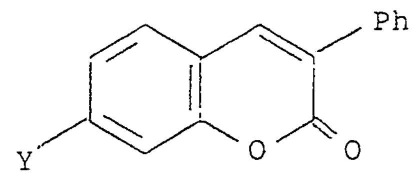

in which Ph is an aromatic radical and Y is a radical corresponding to the following formula

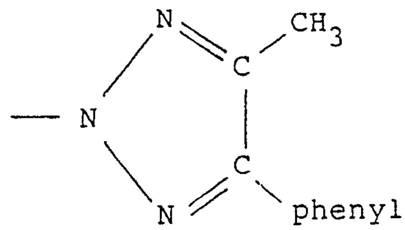

## Revendications

1. Colles à base d'esters d'acide α-cyanoacrylique renfermant les stabilisants habituels, ainsi que, le cas échéant, d'autres substances auxiliaires ainsi que les produits dénommés "azurants optiques" en quantité allant jusqu'à 5000 ppm, caractérisées en ce que l'on sélectionne dans le groupe des substances fluorescentes par rayonnement UV, les suivantes :
   a) Les bis-benzoxazolyles liés par un radical X

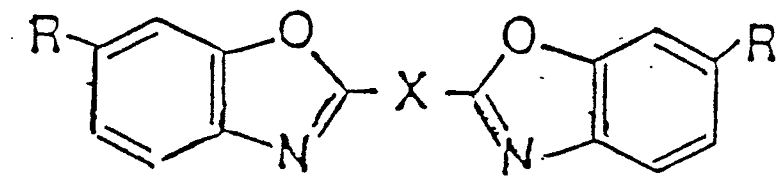

   dans lesquels x représente un cycle thiophénique ou un groupe éthylène
   et R = H ou un radial alcoyle inférieur,
   b) les dérivés de la coumarine

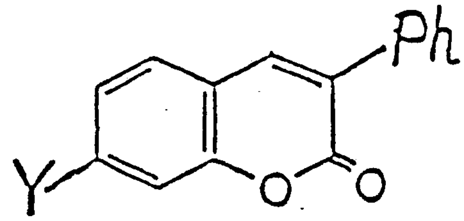

   dans lesquels Ph représente un radical aromatique et Y un reste de formule.